# FASCICULE DE BREVET EUROPEEN

(11) **EP 0 828 619 B1**
(45) Date de publication et mention de la délivrance du brevet: **30.08.2000**
(21) Numéro de dépôt: 96916040.7
(22) Date de dépôt: 10.05.1996
(51) Int. Cl.: B60C 9/18, B60C 9/22, B60C 9/20, B29C 70/08

(54) **PNEUMATIQUE AVEC UNE NAPPE DE RENFORCEMENT A ELEMENTS CIRCONFERENTIELS**
LUFTREIFEN MIT EINER IN UMFANGSRICHTUNG ORIENTIERTEN ELEMENTEN ENTHALTENDE VERSTÄRKUNGSLAGE
TIRE WITH A REINFORCING PLY HAVING PERIPHERAL MEMBERS

(30) Priorité: 30.05.1995 FR 9506504
(43) Date de publication de la demande: 18.03.1998
(73) Titulaire: COMPAGNIE GENERALE DES ETABLISSEMENTS MICHELIN-MICHELIN & CIE, 63040 Clermont-Ferrand Cédex (FR)
(72) Inventeur: BILLIERES, Jean, F-63100 Clermont-Ferrand (FR)
(74) Mandataire: Devaux, Edmond-Yves
(86) Numéro de dépôt international: EP9602011
(87) Numéro de publication internationale: WO9638312

(56) Documents cités:
- EP-A- 0 425 318
- DE-A- 1 937 931
- DE-B- 1 091 890
- FR-A- 2 344 412
- US-A- 4 393 099

## Description

La présente invention concerne un pneumatique à armature de carcasse radiale comprenant en outre une armature formée d'au moins une nappe d'éléments de renforcement composée de fils ou câbles faisant avec la direction circonférentielle dudit pneumatique un angle compris entre 0° et 15°. Elle concerne aussi la méthode de fabrication de ladite nappe à partir d'une bandelette de fils et/ou câbles.

Dans le cas d'un pneumatique pour voiture de tourisme, la ou les nappes d'éléments circonférentiels sont généralement des nappes d'armature de sommet de câbles continus de polyamide, et en particulier aliphatique, ces câbles permettant une certaine élasticité tout en permettant, grâce à leur propriété de contractibilité sous l'effet de la chaleur, un frettage important des nappes sous-jacentes, généralement métalliques et formées de câbles faisant avec la direction circonférentielle un certain angle, généralement compris entre 10° et 45°.

Ce type de câble textile n'est pas recommandé pour une utilisation en grande quantité dans les armatures de sommet pour pneumatiques "Poids-Lourds", en particulier pour les pneumatiques dits routiers. En effet, la matière citée donne lieu à des échauffements, incompatibles avec une bonne endurance du sommet du pneumatique. L'utilisation de câbles métalliques est préférable, car d'une part conduit à une production de chaleur moindre dans les zones sujettes à échauffement, d'autre part conduit à une meilleure évacuation des calories produites.

L'utilisation de câbles métalliques sensiblement circonférentiels dans une nappe d'armature de sommet de pneumatique " Poids-Lourds" n'est pas sans problème, et en particulier lors du moulage du pneumatique dans le moule de vulcanisation. Une bonne répartition du mélange caoutchouteux de la bande de roulement, lors de la fermeture de la presse de cuisson et du début de vulcanisation, exige que le pneumatique à l'état non vulcanisé présente un diamètre de bande de roulement, mesuré dans le plan équatorial, légèrement inférieur au diamètre, mesuré dans les mêmes conditions, qu'il doit avoir dans le moule de vulcanisation, et qu'il subisse, ce qu'il est coutumier d'appeler, un supplément de conformation dans le moule de vulcanisation. Une armature de sommet de pneumatique à armature de carcasse radiale, comprenant une ou plusieurs nappes de câbles métalliques continus et inextensibles ( c'est-à-dire présentant un allongement inférieur à 0,2% sous une force de traction égale à 10% de la charge de rupture ) permet très difficilement ou ne permet pas ledit supplément de conformation sous faible tension.

L'utilisation, telle que décrite par exemple dans le brevet FR 2 013 812, qui correspond au préambule de la revendication 1, de câbles métalliques inextensibles, discontinus sur une longueur circonférentielle s'est alors révélée judicieuse, d'une part parce que permettant l'élasticité suffisante de la nappe à l'état non vulcanisé, d'autre part parce que permettant l'obtention à l'état vulcanisé d'un module d'élasticité sous tension de la nappe très largement suffisant, ledit module étant obtenu par un choix judicieux de la longueur, variable ou non, des câbles coupés et par le décalage circonférentiel des coupures.

L'élasticité de la nappe non vulcanisée est non seulement suffisante mais trop importante pour une manutention aisée lors de la fabrication du pneumatique, et s'est avérée être la cause d'irrégularités de pose, et en particulier d'irrégularités dans les diamètres d'armatures de sommet pour les différents pneumatiques d'une même série.

Il est évident que le problème se pose de la même manière avec toute armature comprenant des câbles métalliques dont les longueurs sont inférieures aux longueurs circonférentielles des parallèles occupés dans le pneumatique, dans la mesure où elle a été préparée indépendamment du tambour de confection et/ou de conformation des ébauches non vulcanisées d'armatures de carcasse de pneumatique, sans cependant avoir obligatoirement les mêmes conséquences.

Dans le but de remédier à de tels inconvénients de fabrication, tout en ne nuisant pas aux performances du pneumatique en roulage, l'invention propose un pneumatique à armature de carcasse, comprenant en outre au moins une nappe de renforcement supplémentaire, de longueur circonférentielle maximale L, composée au moins de tronçons de fils ou câbles métalliques, de longueurs comprises entre 0,1 L et 0,5 L, disposés sensiblement circonférentiellement, parallèlement les uns aux autres et formant des rangées séparées les unes des autres, dans la direction perpendiculaire à leur orientation, par des intervalles, caractérisé en ce qu'un fil ou câble textile en matière synthétique est présent dans au moins un intervalle sur deux, et continu sur toute la longueur des rangées.

Il faut entendre par longueur L d'une nappe de renforcement pour pneumatique la longueur circonférentielle maximale de ladite nappe.

L'invention est particulièrement avantageuse dans le cas où la nappe de renforcement supplémentaire est une nappe d'armature de sommet à câbles circonférentiels, c'est-à-dire de câbles faisant avec la direction circonférentielle du pneumatique un angle compris dans l'intervalle ± 2,5°.

Par câbles disposés sensiblement circonférentiellement, il faut entendre des câbles faisant avec la direction circonférentielle du pneumatique des angles compris entre 0° et 15°.

De manière avantageuse, le fil ou câble textile utilisé est un fil ou câble de faible diamètre, au plus égal à 0,2 fois le diamètre des câbles métalliques de la nappe. L'introduction d'un fil continu de faible diamètre entre les tronçons de câbles métalliques aide à la fabrication de la nappe et son enroulement sur bobine.

Compte tenu du fait que la force de rupture dudit fil ou câble sera au moins égale à la tension devant être subie par le fil ou câble dans l'ébauche non vulcanisée du pneumatique sous l'effet de la pression de galbage utilisée pour la conformation de ladite ébauche, et au plus égale à 5 fois ladite valeur, le fil ou câble est rompu lors de la vulcanisation du pneumatique, pour avoir seulement une nappe de câbles discontinus dans le pneumatique terminé.

Par fil ou câble textile synthétique, il faut entendre un fil ou câble de rayonne et/ou de polyamide et/ou de polyester et/ou de tout autre matériau plastique synthétique susceptible d'être utilisé pour la fabrication de fibres textiles. Ledit fil ou câble textile peut être contractable sous l'effet de la chaleur, et aura sous l'effet de la tension induite par la pression de galbage l'allongement relatif le plus faible possible.

La fabrication d'une nappe de renforcement à éléments discontinus dans la direction des fils ou câbles, peut être mise en oeuvre de plusieurs manières. Une première manière consiste à fabriquer une nappe de fils ou câbles continus selon une des méthodes parfaitement connues, et à sectionner les fils ou câbles de la nappe calandrée ainsi formée à intervalles réguliers ou non longitudinalement espacés. Pour sectionner les éléments de renforcement, on peut utiliser des outils de coupe manuels, ou des outils de coupe automatiques, par exemple tels que décrits dans le brevet US 3 844 327. Cette première méthode, déjà mal adaptée à une coupe câble par câble dans le cas de la seule présence de câbles métalliques, ne l'est absolument pas dans le cas de la présence entre les rangées de câbles métalliques de fils ou câbles textiles, qui ont de fortes chances d'être, eux-aussi, coupés de manière aléatoire. Une deuxième méthode de fabrication de la nappe de câbles discontinus consiste à déposer avec une légère pression sur une couche de mélange caoutchouteux non vulcanisé, préalablement mise sur un tambour cylindrique ou sur une table, des tronçons de fils ou câbles précoupés, ladite dépose se faisant selon un agencement prévu prenant en compte la longueur des tronçons (pouvant être variable ou constante), la distance entre extrémités des tronçons dans le sens longitudinal de la nappe, la distance axiale entre tronçons, qui peut aussi être variable ou non. Pour la fabrication de la nappe conforme à la présente invention, peut être simultanément déposé le fil ou câble continu textile qui est déroulé d'une bobine d'approvisionnement. Les tronçons et le fil ou câble étant posés, la finition de la nappe s'achève par la pose sur les tronçons d'une deuxième couche de mélange caoutchouteux non vulcanisé. Pour la mise en oeuvre de cette deuxième méthode, les tronçons de câbles frettés peuvent être utilisés à l'état nu et le fil ou câble textile sera déposé entre les rangées de tronçons de sorte qu'il ne soit pas en contact avec lesdits tronçons, ce qui demande une grande précision de pose et conduit à une méthode longue et coûteuse. Il est avantageux d'utiliser des tronçons de câbles enrobés, c'est-à-dire des câbles autour desquels aura été préalablement déposé un manchon cylindrique de mélange caoutchouteux par les moyens appropriés, tel que, par exemple, une extrusion où le mélange caoutchouteux, sortant par une filière adaptée, est déposé autour du fil sortant par un orifice de guidage. Préférable pour les câbles frettés, l'utilisation de câbles enrobés est pratiquement obligatoire pour les câbles non frettés.

Une telle utilisation, combinée à la présence d'un fil ou câble intercalaire textile entre deux rangées de tronçons de câbles métalliques, permet, de manière avantageuse, la fabrication d'un pneumatique comprenant une nappe de renforcement à câbles discontinus circonférentiels, c'est-à-dire faisant avec la direction du pneumatique des angles compris dans l'intervalle ± 5°. La méthode de fabrication d'une telle nappe consiste à :
- fabriquer une bandelette composée d'au moins 2 rangées jointives de câbles métalliques, discontinus, enrobés et, entre chaque rangée, d'un fil ou câble textile continu encollé,
- déposer ladite bandelette sur une bande intercalaire de matériau anti-collant, par exemple en polyéthylène, de largeur sensiblement égale au double de la largeur de la bandelette de câbles, et à enrouler le complexe ainsi formé sur une bobine d'enroulement,
- dérouler la bandelette pour l'enrouler en spirales autour d'un tambour cylindrique ou autour d'une ébauche d'armatures de carcasse et/ou de sommet

Les caractéristiques de l'invention seront mieux comprises à l'aide de la description qui suit et qui se réfère au dessin illustrant à titre non limitatif des exemples d'exécution, et sur lequel :

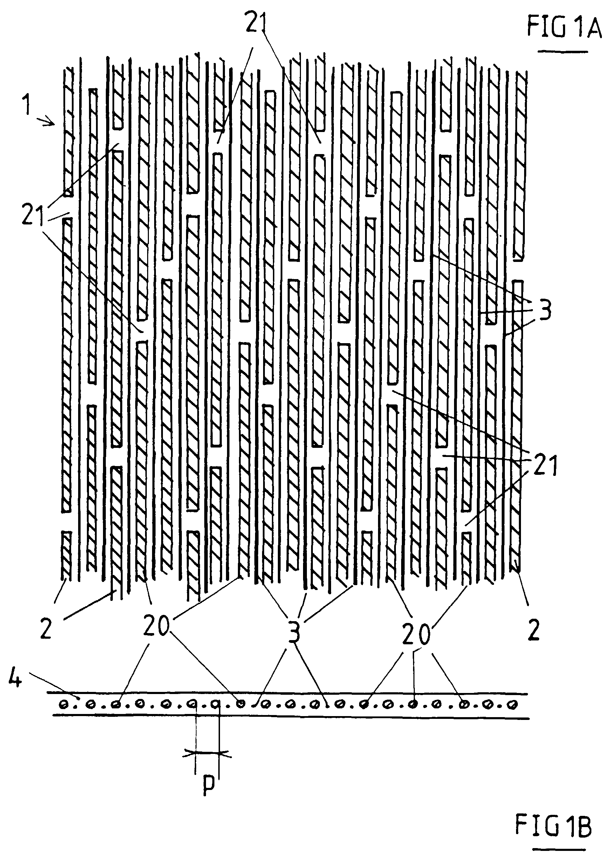

- les figures 1A et 1B représentent schématiquement, vue respectivement en plan et en section méridienne, une nappe de renforcement selon une première variante de l'invention,
- les figures 2A et 2B représentent de la même façon une nappe de renforcement selon une deuxième variante de l'invention.

La nappe de renforcement (1), destinée à être une nappe d'armature de sommet dont les éléments de renforcement (20, 3) seront orientés circonférentiellement, est constituée, d'une part de tronçons (20) de câbles métalliques frettés 27.23 FR, lesdits tronçons (20) ayant tous la même longueur, et étant séparés circonférentiellement les uns des autres par des coupures (21). Une rangée (2) de tronçons (20) est axialement séparée de la rangée axialement adjacente par un intervalle ou pas p, et dans le cas montré ledit pas est axialement constant (le pas étant la distance axiale entre les deux mêmes génératrices, respectivement de deux câbles adjacents). Ces câbles frettés sont utilisés à l'état nu, et, après déroulement d'une (de) bobine(s) d'approvisionnement, défilent sur un convoyeur en étant guidés par des peignes pour parvenir devant un jeu de têtes coupantes, qui, selon un programme prédéterminé, effectuent les coupures (21) telles que désirées. A partir d'une (d') autre(s) bobine(s), un (des) fil(s) (3) de polyamide aliphatique encollé(s), c'est-à-dire revêtu(s) d'une composition à base de latex caoutchouteux, de résorcine, et de formaldéhyde, est(sont) guidé(s) par des moyens appropriés de façon à être disposé(s) dans tous les intervalles existant entre les rangées de tronçons métalliques (20). Les deux séries, respectivement de tronçons métalliques (20) et de fils textiles (3), s'insèrent, comme connu, entre deux couches de mélange caoutchouteux non vulcanisé, lesdites deux couches devenant le calandrage (4) de la nappe (1) ainsi formée. Les fils textiles (3) ayant un diamètre d, égal à 0,25 mm dans le cas étudié, il est préférable que le pas p entre deux rangées (2) de tronçons métalliques (20) soit au moins égal à 1,9 mm, de manière à éviter tout contact possible entre le fil textile (3) encollé et les tronçons (20) qui lui sont adjacents.

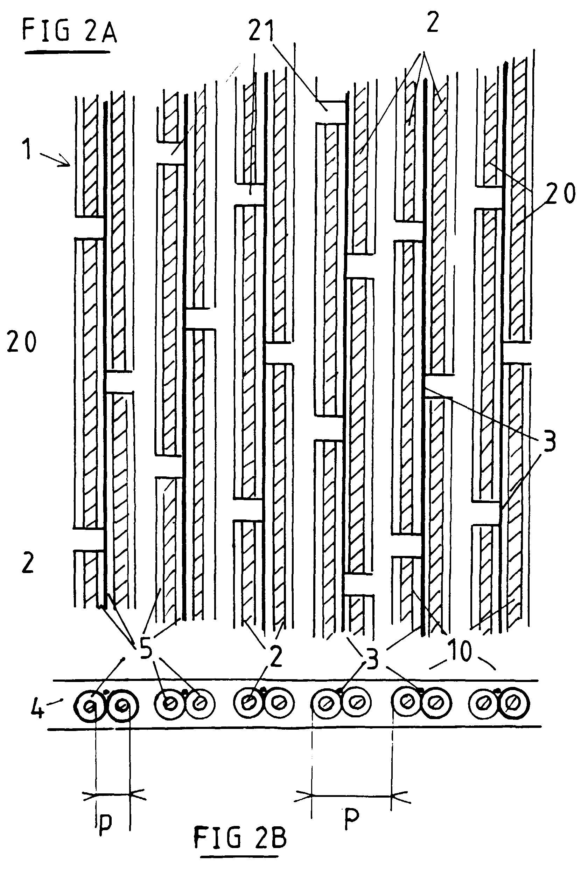

Sur la figure 2 est montrée une nappe de renforcement (1) réalisée à partir d'une bandelette (10) composée de deux rangées (2) de tronçons métalliques (20) de câbles 27.23 non frettés, et enrobés d'une gaine (5) de mélange caoutchouteux non vulcanisé, lesdits tronçons (20) enrobés étant axialement jointifs, et d'un fil textile en rayonne et encollé, déposé entre et sur les deux rangées de tronçons métalliques (20). La fabrication d'une telle bandelette comprend les étapes suivantes : deux câbles métalliques non frettés sont enrobés de la gaine caoutchouteuse non vulcanisée par les moyens connus de l'extrusion, et sont ensuite coupés aux longueurs désirées. Les tronçons (20) ainsi obtenus sont alors guidés par des moyens appropriés jusqu'à devenir jointifs, et sur cet ensemble de deux rangées (2) de tronçons est alors déposé, avec une légère pression verticale, le fil de rayonne encollé (3). La bandelette (10), ainsi formée sur une bande de polyéthylène, de largeur égale à deux fois le diamètre d'un câble enrobé, est enroulée sur une bobine d'approvisionnement comme est habituellement enroulé un câble métallique ou textile, avec un intervalle d'enroulement entre les spires d'enroulement. Pour la formation de la nappe de renforcement (1), les moyens usuels et connus peuvent être employés : on peut enrouler en spirale la bandelette (10) autour d'une forme d'enroulement qui peut être un tambour cylindrique ou transversalement légèrement bombé , sur lequel aura été préalablement déposée une première couche de caoutchouc non vulcanisé ; on peut aussi directement enrouler la bandelette (10) autour de l'ébauche non vulcanisée de l'armature de carcasse du pneumatique à fabriquer, ou de l'ensemble armature de carcasse-nappes de sommet dudit pneumatique, en fonction de l'emplacement radial souhaité de la nappe de renforcement (1) à éléments circonférentiels. Une deuxième couche de mélange termine la nappe de renforcement (1), et formera le calandrage (4) de la nappe (1). Il est évident que la bandelette (10) peut être confectionnée à partir d'un nombre de rangées (2) de tronçons (20) supérieur à 2, sans cependant raisonnablement dépasser le nombre de 5.

Ce principe de formation de la nappe de renforcement (1) offre l'avantage de pouvoir utiliser un mélange caoutchouteux (5) qui, après vulcanisation, présente des propriétés de modules, perte hystérétique, collage, etc différentes de celles du mélange (4) de calandrage : dans le cas décrit, le mélange (5) est un mélange fortement adhérent aux câbles métalliques, avec un module tangent de tension, sous 10% d'allongement relatif, élevé, alors que le mélange (4) de calandrage est un mélange fortement adhérent à l'encollage utilisé sur les fils textiles et avec un module tangent de tension, mesuré sous les mêmes conditions, beaucoup moins élevé. Il est évident que la bandelette (10) peut être posée avec un pas P différent du pas p théorique existant entre les deux rangées de tronçons (théorique, car estimé entre les génératrices des parties métalliques des câbles enrobés), et que l'on peut prévoir de multiples variantes de réalisation, ainsi que de nombreuses variantes structurelles de la nappe de renforcement (1).

## Revendications

1. Pneumatique ayant au moins une armature de carcasse, comprenant en outre au moins une nappe de renforcement (1) supplémentaire, de longueur circonférentielle maximale L, composée au moins de tronçons (20) de fils ou câbles métalliques, de longueurs comprises entre 0,1 L et 0,5 L, disposés sensiblement circonférentiellement, parallèlement les uns aux autres et formant des rangées séparées les unes des autres, dans la direction perpendiculaire à leur orientation, par des intervalles (p, P), caractérisé en ce qu'un fil ou câble textile (3) en matière synthétique est présent dans au moins un intervalle sur deux, et continu sur toute la longueur des rangées.

2. Pneumatique selon la revendication 1, caractérisé en ce que la nappe de renforcement supplémentaire (1) est une nappe à câbles circonférentiels d'armature de sommet.

3. Pneumatique selon l'une des revendications 1 à 2, caractérisé en ce que le fil ou câble textile (3) utilisé est un fil ou câble de faible diamètre, au plus égal à 0,2 fois le diamètre des câbles métalliques de la nappe.

4. Pneumatique selon la revendication 3, caractérisé en ce que le fil ou câble textile (3) utilisé présente une force de rupture au moins égale à la tension devant être subie par le fil ou câble dans l'ébauche non vulcanisée du pneumatique sous l'effet de la pression de galbage utilisée pour la conformation de ladite ébauche, et au plus égale à 5 fois ladite valeur.

5. Méthode de fabrication d'une nappe de renforcement pour pneumatique, composée de rangées de tronçons de câbles métalliques circonférentiels, caractérisée en ce que :
- l'on fabrique une bandelette (10) composée d'au plus 5 rangées (2) jointives de câbles métalliques (20), discontinus, enrobés de mélange caoutchouteux (5) et, entre chaque rangée, d'un fil ou câble textile continu encollé (3), puis
- l'on dépose ladite bandelette (10) sur une feuille intercalaire anti-collante de largeur sensiblement égale au double de la largeur de ladite bandelette, et enroule le complexe ainsi formé sur une bobine d'enroulement, et enfin
- l'on déroule la bandelette pour l'enrouler en spirales autour d'une forme, qui peut être un tambour cylindrique ou une ébauche d'armature de carcasse et de sommet d'un pneumatique.

6. Pneumatique comprenant dans son armature de sommet une nappe de renforcement (1) obtenue par la méthode selon la revendication 5, caractérisé en ce que ladite nappe est composée d'une bandelette (10) composée de deux rangées (2) de tronçons (20) de fils ou câbles métalliques enrobés et, entre lesdites deux rangées (2) d'un fil textile continu encollé (3), ladite bandelette (10) étant enroulée en spirales autour d'une forme avec un pas P supérieur au pas p entre les deux rangées (2) de tronçons (20).

## Patentansprüche

1. Luftreifen mit mindestens einer Karkassenbewehrung, der außerdem mindestens eine zusätzliche Verstärkungslage (1) mit einer maximalen Umfangslänge L aufweist, die mindestens (20) aus Metalldrähten oder -seilen mit Längen zusammengesetzt ist, die zwischen 0,1 L und 0,5 L liegen und im wesentlichen in Umfangsrichtung sowie parallel zueinbander angeordnet sind und Reihen bilden, die voneinander in einer Richtung senkrecht zu ihrer Ausrichtung durch Zwischenräume (p, P) getrennt sind, dadurch gekennzeichnet, daß ein Textildraht oder -seil (3) aus Kunststoff in mindestens einem von zwei Zwischenräumen vorliegt, der über die gesamte Länge der Reihen durchläuft.

2. Reifen nach Anspruch 1, dadurch gekennzeichnet, daß die zusätzliche Verstärkungslage (1) eine Lage der Scheitelbewehrung mit in Umfangsrichtung verlaufenden Seilen ist.

3. Reifen nach einem der Ansprüche 1 bis 2, dadurch gekennzeichnet, daß der verwendete Textildraht oder das verwendete Textilseil (3) ein Draht oder Seil mit geringem Durchmesser ist, der höchstens das 0,2-fache des Durchmessers der Metallseile der Lage beträgt.

4. Reifen nach Anspruch 3, dadurch gekennzeichnet, daß der verwendete Textildraht oder das verwendete Textilseil (3) eine Bruchkraft aufweist, die mindestens gleich ist der Spannung, bevor der Draht oder das Seil im unvulkanisiserten Reifenrohling dem Bombierungsdruck ausgesetzt wird, der für die Verformung des genannten Rohlings aufgewandt wird, und höchstens gleich dem 5-fachen des genannten Wertes.

5. Verfahren zur Herstellung einer Verstärkungslage für einen Luftreifen, die aus Reihen von Metallseilstücken zusammengesetzt ist, die in Umfangsrichtung verlaufen, dadurch gekennzeichnet, daß
- man ein schmales Band (10) herstellt, das aus höchstens 5 nebeneinanderliegenden Reihen (2) aus nicht-durchgehenden, mit einer Gummimischung (5) ummantelten Metallseilen (20) und zwischen jeder Reihe einem durchgehenden, gummierten Textildraht oder -seil (3) zusammengesetzt ist,
- man dann das genannte, schmale Band (10) auf eine nicht-klebende Zwischenbahn mit einer Breite aufträgt, die im wesentlichen gleich der doppelten Breite des genannten, schmalen Bandes ist, und das so geformte Gebilde auf einer Aufwickelspule aufwickelt, und
- man schließlich das schmale Band abwickelt, um es spiralig um eine Form zu wickeln, die eine zylindrische Trommel oder der Rohling einer Karkassen- und Scheitelbewehrung eines Reifens sein kann.

6. Luftreifen, der in seiner Scheitelbewehrung eine Verstärkungslage (1) aufweist, die durch das Verfahren nach Anspruch 5 gewonnen wurde, dadurch gekennzeichnet, daß die genannte Lage aus einem schmalen Streifen (10), der aus zwei Reihen (2) von Stücken (20) aus ummantelten Metalldrähten oder -seilen zusammengesetzt ist, und zwischen den genannten beiden Reihen (2) einem durchgehenden, gummierten Textildraht (3) zusammengesetzt ist, wobei der genannte Streifen (10) spiralig um eine Form mit einer Teilung P herumgewickelt ist, die größer ist als die Teilung p zwischen den beiden Reihen (2) von Stücken (20).

## Claims

1. A tyre having at least one carcass reinforcement, furthermore comprising at least one additional reinforcement ply (1) of maximum circumferential length L, composed at least of lengths (20) of metal cords or cables, of lengths of between 0.1 L and 0.5 L, arranged substantially circumferentially, parallel to each other and forming rows separated from each other, in the direction perpendicular to their orientation, by gaps (p, P), characterised in that a textile cord or cable (3) of synthetic material is present in at least one gap out of two, and continuous over the entire length of the rows.

2. A tyre according to Claim 1, characterised in that the additional reinforcement ply (1) is a ply with circumferential crown reinforcement cables.

3. A tyre according to one of Claims 1 to 2, characterised in that the textile cord or cable (3) used is a cord or cable of small diameter, at most equal to 0.2 times the diameter of the metal cables of the ply.

4. A tyre according to Claim 3, characterised in that the breaking load of the textile cord or cable (3) used is at least equal to the tension to which the cord or cable has to be subjected in the non-vulcanised blank of the tyre under the action of the shaping pressure used for the shaping of said blank, and at most equal to 5 times said value.

5. A method for producing a reinforcement ply for a tyre, composed of rows of lengths of circumferential metal cables, characterised in that:
- a strip (10) is produced, composed of at most 5 contiguous rows (2) of discontinuous metal cables (20) coated with rubber mix (5) and, between each row, a sized continuous textile cord or cable (3), then
- said strip (10) is laid on an inserted non-stick sheet of a width substantially equal to twice the width of said strip, and the complex thus formed is wound on a winding reel, and finally
- the strip is unwound in order to wind it in coils around a form, which may be a cylindrical drum or a blank of carcass and crown reinforcements of a tyre.

6. A tyre, comprising within its crown reinforcement a reinforcement ply (1) obtained by the method according to Claim 5, characterised in that said ply is composed of a strip (10) composed of two rows (2) of lengths (20) of coated metal cords or cables and, between said two rows (2), of a continuous sized textile cord (3), said strip (10) being wound in coils around a form with a pitch P greater than the pitch p between the two rows (2) of lengths (20).
